# EUROPÄISCHE PATENTSCHRIFT

(11) **EP 3 127 845 B1**
(45) Veröffentlichungstag und Bekanntmachung des Hinweises auf die Patenterteilung: **18.12.2019**
(21) Anmeldenummer: 16180930.6
(22) Anmeldetag: 25.07.2016
(51) Int. Cl.: B65H 75/44, B65H 59/04, G02B 6/44, H02G 3/30

(54) **VORRICHTUNG ZUM AUFNEHMEN EINER ÜBERLÄNGE EINES KABELS, INSTALLATIONSBOX, INSTALLATIONSSCHRANK UND RACK-EINSCHUB MIT EINER DERARTIGEN VORRICHTUNG**
DEVICE FOR HOLDING AN EXCESS LENGTH OF A CABLE, INSTALLATION BOX, INSTALLATION CABINET AND RACK DRAWER WITH SUCH A DEVICE
DISPOSITIF DE RECEPTION D'UNE SURLONGUEUR D'UN CABLE, BOITIER D'INSTALLATION, ARMOIRE D'INSTALLATION ET BATI UNIQUE COMPRENANT UN TEL DISPOSITIF

(30) Priorität: 04.08.2015 CH 11302015
(43) Veröffentlichungstag der Anmeldung: 08.02.2017
(73) Patentinhaber: Diamond SA, 6616 Losone (CH)
(72) Erfinder: Coggi, Victor, 6616 Losone (CH); Fantini, Dionigi Sergio, 21030 Ghirla (IT)
(74) Vertreter: Hepp Wenger Ryffel AG

(56) Entgegenhaltungen:
- WO-A1-2013/130589
- WO-A2-2009/089307
- US-A- 5 499 727
- US-A1- 2005 145 522
- US-A1- 2007 210 680
- US-A1- 2008 011 514
- US-B1- 6 269 213
- US-B1- 6 398 149
- US-B2- 8 443 989

## Beschreibung

Die vorliegende Erfindung betrifft eine Vorrichtung zum Aufnehmen einer Überlänge eines Kabels, insbesondere eines Glasfaserkabels gemäss dem Oberbegriff von Anspruch 1.

Aus dem Stand der Technik sind verschiedene Kabelspulen und Kabelrollen bekannt. Diese eignen sich jedoch nur bedingt zur Aufnahme einer Überlänge eines Kabels in einem Installationsschrank.

Die US 8,443,989 B2 offenbart eine Aufrollspule zur Aufnahme von Überlängen von Patchkabeln. Die Aufrollspule weist eine hakenförmige Struktur auf, welche in Abstandhalterstangen zwischen den einzelnen Racks eingehängt werden können. Entsprechend muss für diese Aufrollspulen bzw. für die Abstandshalterstangen Platz im Installationsschrank vorgesehen werden.

Die US 8,831,394 B2 offenbart einen Kabelhalter zum Aufrollen einer Überlänge an Kabel. Der Kabelhalter kann fest an einem Gehäuse oder Boden mittels eines integrierten Schnappers befestigt werden. Das Kabel kann nun um den Wickelkern herum aufgewickelt werden. Ausserdem können die Kabelhalter aufeinandergesetzt werden, um eine hohe Packungsdichte zu erreichen. In diesem Fall ist jedoch ein späteres Auf- oder Abwickeln des Kabels nur schwer möglich.

Die US 7,077,693 B1 offenbart eine Aufrollspule, welche mittels einer Befestigungsplatte an einem beliebigen Ort platziert werden kann. Die Aufrollspule besteht im Wesentlichen aus einem Spulenkörper, welcher einen minimalen Biegeradius definiert. Die Dimension des Spulenhalters bzw. der Abstand der seitlichen Flansche ist derart gewählt, dass lediglich eine Kabelwindung zwischen den beiden Flanschen Platz findet. Randseitig weist der Flansch ein Rückhaltemittel auf, welches verhindert, dass sich das Kabel unerwünscht von der Spule abrollt. Nachteilig an dieser Lösung ist, dass keine hohe Packungsdichte erreicht werden kann.

Die US 6,269,213 B1 offenbart ein System zur Aufnahme von Überlängen von optischen Kabeln. Es sind verschiedene Spulenkörper parallel angeordnet, wobei die Spulen jeweils magnetisch an einem Trägerkörper befestigt werden, welcher mittels eines Schienensystems herausziehbar ist.

Die US 2005/145522 A1 zeigt eine Installationsbox zur Aufnahme einer Überlänge eines faseroptischen Kabels. Die Kabelüberlänge kann auf einem drehbaren Spulenkörper in der Installationsbox gelagert sein.

In der US 2008/011514 A1 ist eine Kabelspule mit einem Aufsteckdorn zu deren Aufnahme gezeigt. Die Kabelspule kann mit dem Aufsteckdorn in einem Racksystem montiert werden. Die Drehachse ist rechtwinklig zu einer Anschlagseite des Aufsteckdorns angeordnet.

In der US 2007/210680 A1 wird ein Aufnahmehaken für aufgewickelte Kabelüberlängen offenbart, welcher an einem Racksystem angeordnet werden kann.

Die WO 2009/089307 A2 zeigt einen Aufnahmehaken für aufgewickelte Kabelüberlängen. Eine Rückhaltestrebe kann unterschiedlich orientiert werden.

Die WO 2013/130589 A1 offenbart eine Kabelrolle mit Aufnahme für eine Anschlussbox mit zusätzlicher Kabelüberlänge auf einer Rolle.

Die US 5,499,727 A zeigt ein Präsentations- und Aufhängesystem für aufrollbare Waren, wie Kabel, Draht, Ketten, Seile, usw. Das System umfasst eine Aufhängestange, Hakenelemente für die Aufnahme einer Rollenachse und eine Rolle, sowie ein Bremselement. Die Rollenachse ist nicht in der Spule integriert und die Hakenelemente müssen paarweise verwendet werden.

Es ist daher eine Aufgabe der Erfindung die Nachteile des Standes der Technik zu überwinden. Insbesondere soll eine Vorrichtung zum Aufnehmen einer Überlänge eines Kabels in einem Installationsschrank zur Verfügung gestellt werden, welche das Erreichen hoher Packungsdichten bei einer Mehrzahl von Vorrichtungen ermöglicht, ohne die Auf- und Abrollbarkeit der einzelnen Kabel zu beeinträchtigen. Ausserdem soll die Vorrichtung schnell und einfach in einem Installationsschrank fixierbar und austauschbar sein.

Diese Aufgabe wird durch die im unabhängigen Patentanspruch 1 definierte Vorrichtung gelöst. Weitere Ausführungsformen ergeben sich aus den abhängigen Patentansprüchen.

Eine erfindungsmässe Vorrichtung zum Aufnehmen einer Überlänge eines Kabels, insbesondere eines Glasfaserkabels, in einem Installationsschrank umfasst eine Trägereinheit und einen Spulenkörper, der um eine Drehachse drehbar ist. Dabei weist der Spulenkörper einen Wickelkern mit beidseitig angeordneten Begrenzungselementen, insbesondere Seitenrändern auf, welche einen Stauraum definieren. Der Spulenkörper weist weiter ein Befestigungselement und die Trägereinheit ein zum Befestigungselement des Spulenkörpers korrespondierendes Aufnahmeelement zum lösbaren und vorzugsweise drehbaren Befestigen des Spulenkörpers in oder an der Trägereinheit auf. Die Trägereinheit weist eine Anschlagseite auf, welche zum Befestigen der Trägereinheit an einer korrespondierenden Anschlagfläche im Installationsschrank dient. Erfindungsgemäss ist die Drehachse des Spulenkörpers der Vorrichtung parallel oder in einem Winkel von maximal 45°, vorzugsweise von maximal 20°, besonders bevorzugt von maximal 10° zur Anschlagseite der Trägereinheit angeordnet.

Hier und im Folgenden wird unter einem Installationsschrank jede Art von geschlossenem oder teilgeschlossenem Gehäuse verstanden, welches für das Kabelmanagement und/oder zum Unterbringen von elektrischen, elektronischen und/oder elektromechanischen Bauteilen, wie Sicherungs- und Schaltelemente, verwendet wird. Insbesondere wird unter einem Installationsschrank ein Verteilerkasten, ein Verteilschrank, ein Schaltschrank, ein Sicherungskasten oder ein Systemschrank verstanden. Ebenfalls werden in der vorliegenden Erfindung auch die verschiedenen Rack-Typen, wie beispielsweise das Mini Rack oder 10-Zoll-Rack, das 19-Zoll-Rack, das ETSI-Racks nach ETS 300 119, das 21-Zoll-Rack oder 23-Zoll-Rack unter dem Begriff Installationsschrank verstanden. Solche Installationsschränke werden in Wohneinheiten, Büro- und Arbeitseinheiten, in Laboreinheiten sowie in Rechen- und Serverzentren eingesetzt.

Die Anschlagseite der Trägereinheit ist im Idealfall als flächiges Element ausgebildet. Es ist jedoch auch denkbar, dass diese Anschlagseite konkav oder konvex oder jede andere Form aufweist. Ebenfalls ist es denkbar, dass die Anschlagseite lediglich durch Kontaktpunkte definiert wird. Entsprechend ist die Anschlagseite so zu verstehen, dass diese eine Montageebene aufspannt, welche mit der Anschlagsfläche im Installationsschrank korrespondiert.

Durch die Ausrichtung der Drehachse bzw. des Spulenkörpers kann gewährleistet werden, dass nebeneinander eine Vielzahl von Spulenkörpern dicht gepackt im Installationsschrank angeordnet werden können. Eine parallele Ausrichtung erlaubt die höchste Packungsdichte. Durch eine solche Anordnung wird weiter gewährleistet, dass die Wickelebene der Kabelüberlänge in etwa senkrecht zur Anschlagfläche im Installationsschrank angeordnet wird. Entsprechend ist die Überlänge des Kabels weiterhin zugänglich, insbesondere auch dann, wenn eine Vielzahl von Spulenkörper nebeneinander angeordnet ist. Es versteht sich von selbst, dass unter der Anschlagfläche im Installationsschrank beispielsweise auch eine Rückwand des Installationsschrankes oder eine Montagschiene verstanden werden kann. Insbesondere bei der Verwendung in einem Rack-System kann die Anschlagfläche in einem Rack-Einschub unterschiedlich angeordnet sein. So kann diese Anschlagfläche beispielsweise parallel zu einer Front oder Rückwand des Racks oder aber in einem rechten Winkel zu der Rückwand und der Frontfläche angeordnet sein. Insbesondere eignet sich hierzu die Verwendung von Montageschienen. Ebenso kann jedoch unter der Anschlagsfläche auch eine beliebige Wand verstanden werden, welche nicht in einem Installationsschrank angeordnet ist sondern beispielsweise auf einem Installationstableau oder gar an einer gewöhnlichen Wand.

Die Trägereinheit kann einstückig ausgestaltet sein. Entsprechend wird die Montage der Trägereinheit mit ihrer Anschlagseite einfach montierbar, beispielsweise an einer Anschlagsfläche in einem Installationsschrank.

Die Trägereinheit ist ein Blechbiegeteil, welches U-förmig mit der Anschlagseite als Basis und zwei parallel verlaufenden seitlichen Schenkeln ausgestaltet ist. Die Schenkel nehmen je ein Aufnahmeelement auf.

Die Trägereinheit kann ein Befestigungsmittel zum insbesondere werkzeuglosen lösbaren Befestigen an einer Tragschiene im Installationsschrank aufweisen. Ein solches Befestigungsmittel ist insbesondere vorteilhaft, wenn ein herkömmlicher Installationsschrank verwendet wird, welcher bereits normierte Tragschienen zur Befestigung anderer elektrischer oder elektronischer Komponenten wie beispielsweise Schaltkomponenten aufweist. Ausserdem erlaubt ein solches Befestigungsmittel, dass die Trägereinheit mit nur sehr geringem Aufwand im Installationsschrank befestigt werden kann. Normierte Tragschienen entsprechen beispielsweise der Norm DIN EN 60715:2001-09. Es sind jedoch auch andere Tragschienen denkbar.

Der Spulenkörper kann einen inneren Stauraum aufweisen, welcher im Innern des Wickelkerns angeordnet ist. Ein solcher innerer Stauraum erlaubt beispielsweise, dass der Spulenkörper eine Kabelüberlänge aufnimmt und trotzdem die Enden des Kabels frei zugänglich sind. Beispielsweise kann so ein erstes Kabelende im inneren Stauraum aufgenommen werden. Vorzugsweise wird dieses Kabelende eine Länge aufweisen, welche es ermöglicht, das Kabel im Installationsschranke an die entsprechenden Komponenten anzuschliessen. Es versteht sich von selbst, dass dieser innere Stauraum des Spulenkörpers von aussen zugänglich ist. Ein innerer Stauraum ist vorteilhaft, wenn die Vorrichtung verpackt und transportiert werden muss. Das im inneren Stauraum aufgenommene Kabelende mit Verbinder wird somit durch den Spulenkörper vor äusseren Einflüssen geschützt, was insbesondere bei der Verwendung von Glasfaserkabeln wünschenswert ist. Ebenso ist es denkbar, dass der Stauraum mittels einer Trennwand in einen ersten und einen zweiten Stauraum unterteilt oder unterteilbar ist. Die Trennwand kann vorzugsweise lösbar und in verschiedenen Positionen auf dem Wickelkern fixierbar sein. Entsprechend kann der für das Aufwickeln der Kabelüberlänge benötigte Platz entsprechend aufgeteilt und angepasst werden. Durch die Verwendung einer Trennwand kann der Spulenkörper wesentlich einfacher ausgestaltet werden.

Zwischen dem Stauraum und dem inneren Stauraum und/oder dem ersten und zweiten Stauraum kann ein Durchgang zum Durchführen eines Kabels angeordnet sein. Ein solcher Durchgang vereinfacht das Durchführen des aufzunehmenden Kabels zwischen den einzelnen Stauräumen. Wenn dieser Durchgang genügend gross dimensioniert ist, kann sogar ein fertig konfektioniertes Kabel, also ein Kabel welches mit einem Anschlussverbinder versehen ist, durch den Durchgang hindurch geführt werden, sodass sich der Verbinder mit einer bestimmten Kabellänge im anderen Stauraum befindet. Bei der Verwendung einer Trennwand zum Abtrennen der Stauräume kann die Trennwand eine Aussparung aufweisen, welche als Durchgang dient. Vorzugsweise wird mittels dieser Aussparung das Aufschieben der Trennwand auf den Spulenkörper ermöglicht.

Die Begrenzungselemente des Spulenkörpers können umlaufend geschlossen sein. Solche geschlossenen Begrenzungselemente vereinfachen das Aufwickeln einer Kabelüberlänge. Die Begrenzungselemente könnten auch als Seitenränder oder Gitter oder sternförmige Stäbe ausgebildet sein.

Der Wickelkern kann einen minimalen Durchmesser von 50 mm aufweisen. Insbesondere bei der Verwendung der Vorrichtung zum Aufnehmen von Überlängen von Glasfaserkabeln ist das Einhalten eines minimalen Biegeradius vorteilhaft. Es hat sich gezeigt, dass der Durchmesser von 50 mm einen optimalen Kompromiss bietet um den minimalen Biegeradius üblicher Glasfaserkabel einzuhalten und trotzdem noch genügend Platz zum Aufnehmen einer Überlänge zur Verfügung gestellt wird.

Die Seitenränder können einen maximalen Durchmesser von 75 mm aufweisen. Auch bei diesem Wert handelt es sich um einen Kompromiss zwischen kleinem Platzbedarf und möglichst grosser Aufnahmekapazität für Kabelüberlängen. Allgemein gebräuchliche Glasfaserkabel für Wohneinheiten und Installationsschränke sowie für Büro-/Arbeitseinheiten und 19-Zoll-Verteilschränke weisen einen Aussendurchmesser zwischen ca. 2.5 mm und 3 mm auf, so dass die Überlänge vierlagig oder gar fünflagig aufgenommen werden kann.

Zwischen den Seitenrändern kann ein lichter Abstand zwischen 20 bis 25 mm bestehen. Es hat sich gezeigt, dass eine solche Dimensionierung für die meisten Überlängen ausreichend ist. Entsprechend können zwischen sechs und acht, bzw. zwischen acht und zwölf Kabelwindungen eines üblichen Glasfaserkabels verwendet werden. Bei üblichen Installationen wird eine Überlänge von 5 m eingerechnet.

Es versteht sich von selbst, dass je nach Anforderungen der Installation die Dimensionen des Spulenkörpers und/oder des Glasfaserkabels angepasst werden können.

Die Vorrichtung kann eine Bremsvorrichtung aufweisen, welche ein unbeabsichtigtes Drehen des Spulenkörpers relativ zur Trägereinheit verhindert oder zumindest erschwert. Dabei wird der Spulenkörper oder die Kabelwicklung mit einer Bremskraft beaufschlagt. Eine solche Bremsvorrichtung erlaubt es, nach Aufnahme der Kabelüberlänge sicherzustellen, dass nicht unbeabsichtigt wieder Kabel abgerollt wird. Die Bremsvorrichtung kann an der Trägereinheit und/oder zwischen dem Spulenkörper und der Trägereinheit angeordnet sein.

Die Bremsvorrichtung und der Spulenkörper können derart korrespondierend ausgestaltet sein, dass eine Arretierung des Spulenkörpers ermöglicht wird.

Die Bremsvorrichtung kann als einfacher Bügel, insbesondere als Drahtbügel, beispielsweise aus einem Federstahldraht, ausgebildet sein und zwischen Trägereinheit und Spulenkörper eingespannt werden. Der Bügel beaufschlagt den Spulenkörper oder die Kabelwicklung mit seiner Federvorspannung.

Die Bremsvorrichtung kann an der Trägereinheit befestigt sein, so dass bei einem Entfernen des Spulenkörpers die Bremsvorrichtung in Position gehalten wird. Beispielsweise weist die aus einem Draht bügelförmig ausgestaltete Bremsvorrichtung an beiden Enden des Drahtes abgewinkelte Bereiche aus, welche je in eine entsprechende Bohrung der Trägereinheit einführbar und durch eine Vorspannung des Bügels fixierbar sind. Die Trägereinheit kann weitere Fixierelemente aufweisen um die Bremsvorrichtung befestigen zu können. Beispielsweise kann hierzu an beiden Schenkeln der U-förmig ausgestalteten Trägereinheit im Übergangsbereich zur Anschlagseite je eine Lasche ausgebildet sein, so dass die Bremsvorrichtung zwischen Lasche und Anschlagseite aufgenommen wird.

Ebenso ist es denkbar, dass die Bremsvorrichtung insbesondere einstückig als einseitig eingespannte Blattfeder an der Trägereinheit angeordnet ist. Entsprechend wird kein zusätzliches Teil benötigt. Insbesondere bei der Ausgestaltung der Trägereinheit als U-förmiges Blechbiegeteil, kann die Bremsvorrichtung als Blattfeder einfach durch Stanzen in den seitlichen Schenkeln ausgebildet werden.

Die Bremsvorrichtung wirkt vorzugsweise auf wenigstens einen Seitenrand des Spulenkörpers, um eine unnötige Belastung auf das Kabel zu verhindern. Ausserdem ist die Bremskraft somit unabhängig vom Material des aufgerollten Kabels. Wenn der Seitenrand nicht ganz flach sondern umlaufend mit Kerben oder mit Vertiefungen versehen ist, welche mit dem Durchmesser des Drahtbügels oder einem vorstehenden Element der Bremsvorrichtung korrespondieren, kann eine Rastwirkung erreicht werden. Die Bremskraft entspricht somit nicht nur der Haftreibungskraft zwischen Seitenrand und Bremsvorrichtung sondern kann durch eine geeignete Dimensionierung der Kerben oder Vertiefungen beliebig eingestellt werden.

Die Bremsvorrichtung kann auch als Feststellbremse ausgestaltet sein, welche ein Drehen des Spulenkörpers komplett verhindert. Die Bremsvorrichtung und der Spulenkörper können derart korrespondierend ausgestaltet sein, dass eine Arretierung des Spulenkörpers ermöglicht wird. So kann beispielsweise eine Aufnahme im Spulenkörper vorgesehen sein, in welche die Bremsvorrichtung oder ein Teil der Bremsvorrichtung eingreifen kann. Eine Drehbewegung des Spulenkörpers kann entsprechend komplett verhindert werden. Ein unbeabsichtigtes Abwickeln des Glasfaserkabels kann somit ausgeschlossen werden.

Das Befestigungsmittel kann als Klammer ausgestaltet sein. Dadurch, dass das Befestigungsmittel als Klammer ausgestaltet ist, wird ein werkzeugloses Befestigen der Trägereinheit an einer Tragschiene ermöglicht. Beispielsweise kann die Klammer ein einfaches Einrasten in der Tragschien ermöglichen. Die Klammer kann so ausgestaltet sein, dass eine lösbare Befestigung der Trägereinheit an der Tragschiene ermöglicht wird.

Das Befestigungsmittel kann lösbar an der Trägereinheit befestigt sein. Entsprechend ist eine leichte Anpassung der Trägereinheit an die im Installationsschrank oder an der entsprechenden Wand bereits vormontierte Trägerschiene möglich. Es wird ein modularer Aufbau ermöglicht. Vorzugsweise wird das Befestigungsmittel an der Trägereinheit festgeschraubt. Eine Schnappverbindung ist jedoch ebenso denkbar.

Das Aufnahmeelement kann als Einrastprofil oder als Einhakprofil oder als vorzugsweise runde Aussparung zum Aufnehmen des Befestigungselementes des Spulenkörpers ausgestaltet sein. Durch die Ausgestaltung eines Einhakprofils ist eine sehr einfache Konstruktion bzw. ein sehr einfaches Befestigen des Spulenkörpers in der Trägereinheit möglich. Ein solches Einhakprofil kann beispielsweise auch eine drehbare Befestigung des Spulenkörpers in der Trägereinheit ermöglichen.

Wenn das Aufnahmeelement als Einrastprofil ausgestaltet ist, kann das Befestigungselement des Spulenkörpers einfach eingerastet werden. Beispielsweise ist so ein Zusammenstecken von Spulenkörper und Trägereinheit möglich. Ausserdem wird durch die Einrastfunktion das Befestigen lageunabhängig gewährleistet.

Bei einer Ausgestaltung des Aufnahmeelements als Aussparung in der Trägereinheit, kann beispielsweise direkt eine Welle des Spulenkörpers aufgenommen werden. Eine solche Aussparung lässt sich in Blechbiege- und Stanztechnik einfach realisieren. Sowohl die Trägereinheit als auch der Spulenkörper können einfacher und günstiger hergestellt werden.

Ein weiterer Aspekt der vorliegenden Erfindung betrifft eine Installationsbox umfassend eine Kabelspule und eine Vorrichtung wie vorgängig beschrieben. Die Installationsbox nimmt somit nicht nur die Vorrichtung zur Aufnahme einer Kabelüberlänge auf, sondern eine bereits fertig konfektionierte, d.h. mit Steckverbindern ausgestaltete Kabellänge. Dabei ist die Kabellänge auf der Kabelspule bzw. auf dem Spulenkörper der Vorrichtung aufgespult. Beispielsweise kann eine bemessene Kabellänge auf der Kabelspule aufgenommen und eine Kabelreserve oder eine Überlänge auf dem Spulenkörper der Vorrichtung aufgewickelt sein. Eine solche Installationsbox ermöglicht einem Installateur insbesondere bei der Verkabelung einer Wohneinheit ein schnelles Installieren der entsprechenden Leitung. Ausserdem muss eine Überlänge des Kabels nicht gekürzt werden sondern kann vom Installateur nach der Montage einfach auf dem Spulenkörper aufgerollt werden.

Die Vorrichtung kann in einem Aufnahmeraum in der Kabelspule aufgenommen sein. Entsprechend wird für die Vorrichtung in der Installationsbox kaum zusätzlicher Platz benötigt und es können Installationsboxen von üblicher Grösse verwendet werden.

Ein weiterer Aspekt der vorliegenden Erfindung betrifft einen Installationsschrank zum Installieren von elektrischen und/oder faseroptischen Komponenten, wobei im Installationsschrank wenigstens eine Vorrichtung wie vorgängig beschrieben angeordnet ist.

Ein weiterer Aspekt der vorliegenden Erfindung betrifft einen Rack-Einschub zum Installieren von elektrischen und/oder faseroptischen Komponenten, wobei im Rack-Einschub wenigstens eine Vorrichtung wie vorgängig beschrieben angeordnet ist.

Anhand von Figuren, welche lediglich Ausführungsbeispiele darstellen, wird die Erfindung im Folgenden näher erläutert. Es zeigen:
- Figur 1:: eine erfindungsgemässe Vorrichtung in perspektivischer Ansicht,
- Figur 2:: die Vorrichtung aus Figur 1 in einer Explosionszeichnung,
- Figur 3:: eine zweite Ausführungsform einer erfindungsgemässen Vorrichtung in perspektivischer Ansicht,
- Figur 4:: die Vorrichtung aus Figur 3 in einer Seitenansicht,
- Figur 5:: ein Spulenkörper einer erfindungsgemässen Vorrichtung in perspektivischer Darstellung,
- Figur 6a:: der Spulenkörper aus Figur 5 in einer Schnittzeichnung entlang der Drehachse,
- Figur 6b:: der Spulenkörper aus Figur 5 in einer Seitenansicht,
- Figur 7a:: eine ausschnittsweise Ansicht eines erfindungsgemässen Installationsschrankes zum Zeitpunkt der Befestigung der Vorrichtung aus Figur 1,
- Figur 7b:: einen Ausschnitt aus dem Installationsschrank gemäss Figur 7a, wobei die Vorrichtung installiert ist,
- Figur 8:: einen Ausschnitt aus dem Installationsschrank gemäss Figur 7a, wobei eine Vielzahl von Vorrichtungen nebeneinander installiert sind,
- Figur 9:: eine erfindungsgemässe Installationsbox in einer perspektivischen Ansicht,
- Figur 10:: die Installationsbox aus Figur 9, wobei die Kabelrolle zweigeteilt ist um einen Einblick auf die Vorrichtung gemäss Figur 1 zu erlauben,
- Figur 11a:: einen Installationsschrank mit der erfindungsgemässen Installationsbox gemäss Figur 9,
- Figur 11b:: den Installationsschrank aus Figur 11a mit bereits teilweise eingezogenem Kabel und der erfindungsgemässen Vorrichtung nach Figur 1,
- Figur 12a:: eine Ansicht auf einen erfindungsgemässen RackEinschub,
- Figur 12b:: eine Ansicht von schräg hinten auf den geöffneten Rack-Einschub aus Figur 12a,
- Figur 12c:: eine vergrösserte Ansicht auf zwei Vorrichtungen des Rack-Einschubes nach Figur 12a,
- Figur 13:: eine weitere Ausführungsform einer erfindungsgemässen Vorrichtung in perspektivischer Ansicht,
- Figur 14:: die Vorrichtung aus Figur 13 in einer Explosionszeichnung,
- Figur 15:: ein Spulenkörper der Vorrichtung aus den Figuren 13 und 14 in perspektivischer Darstellung,
- Figur 16a:: der Spulenkörper aus Figur 15 in einer Schnittzeichnung entlang der Drehachse, und
- Figur 16b:: der Spulenkörper aus Figur 15 in einer Seitenansicht.

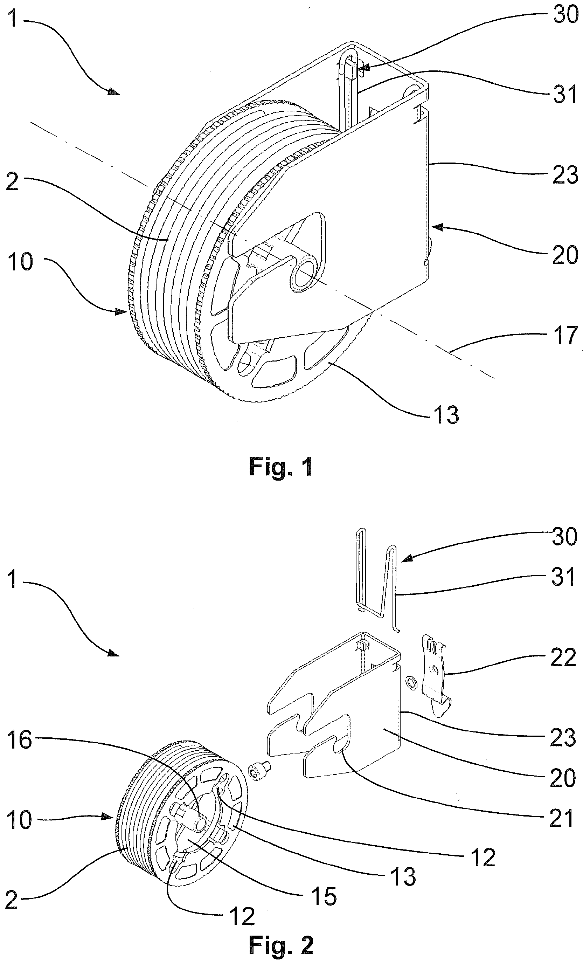

Die Figur 1 zeigt eine erfindungsgemässe Vorrichtung 1 in perspektivischer Ansicht. Die Vorrichtung 1 umfasst im Wesentlichen einen Spulenkörper 10 mit darauf aufgewickeltem Glasfaserkabel 2 sowie eine Trägereinheit 20. Der Spulenkörper weist eine zentrale Drehachse 17 auf, welche durch eine Welle 18 definiert wird. Der Spulenkörper 10 weist beidseitig einen Seitenrand 13 auf, welcher verhindert, dass das Glasfaserkabel 2 seitlich vom Spulenkörper 10 fällt. Der Spulenkörper 10 ist vorzugsweise aus Kunststoff und in Spritzgusstechnik gefertigt. Der gezeigte Spulenkörper ist aus ABS-Kunststoff gefertigt. Selbstverständlich sind auch andere Materialien denkbar.

Die Trägereinheit 20 ist im Wesentlichen U-förmig ausgestaltet und weist eine Anschlagseite 23 auf, welche bei Verwendung in einem Installationsschrank an einer korrespondierenden Anschlagfläche anliegt. Die Trägereinheit 20 ist als Blechbiegeteil dargestellt und aus Aluminium gefertigt. Selbstverständlich sind auch andere Materialien denkbar.

Zwischen dem Spulenkörper 10 und der Trägereinheit 20 ist eine Bremsvorrichtung 30 in Form eines Bremsbügels 31 angeordnet. Dieser Bremsbügel 31 ist vorzugsweise aus einem Federstahldraht gefertigt und zwischen Trägereinheit 20 und Spulenkörper 10 eingespannt. Um seine Lage zu fixieren, ist der Bremsbügel 31 vorzugsweise an der Trägereinheit 20 fixiert. Durch seine Federcharakteristik kann der Bremsbügel 31 eine Kraft auf den Spulenkörper auswirken, sodass diese gebremst wird und ein unbeabsichtigtes Abrollen des Glasfaserkabels verhindert wird.

Figur 2 zeigt die Vorrichtung 1 aus Figur 1 in einer Explosionszeichnung. Wiederum zu erkennen ist der Spulenkörper 10 mit seinem aufgewickelten Glasfaserkabel 2. Das Glasfaserkabel 2 ist nicht nur auf der Aussenseite des Spulenkörpers 10 zwischen den beiden Seitenrändern 13 aufgewickelt, sondern wird auch durch einen Durchgang 12 in einen inneren Stauraum 15 geführt. Wiederum deutlich zu erkennen ist die U-förmige Ausgestaltung der Trägereinheit 20. Damit die Trägereinheit 20 den Spulenkörper 10 aufnehmen kann, weist die Trägereinheit 20 an beiden Schenkeln der U-Form ein Aufnahmeelement 21 auf, welches durch einen hakenförmigen Ausschnitt gebildet wird. In diesem Aufnahmeelement 21 wird die Welle des Spulenkörpers 10 an den Enden aufgenommen. Die beiden Enden der Welle bilden dabei die entsprechenden Befestigungselemente 16. Weiter zu erkennen ist die Bremsvorrichtung 30, welche als Bremsbügel 31 ausgestaltet ist. Die Trägereinheit 20 weist weiter ein Befestigungsmittel 22 in Form einer Klammer auf, welche an der Anschlagseite 23 der Trägereinheit angeordnet ist. Das Befestigungsmittel 20 wird dabei mit einer Schraube an der Trägereinheit 20 befestigt. Selbstverständlich sind auch andere Arten der Befestigung denkbar.

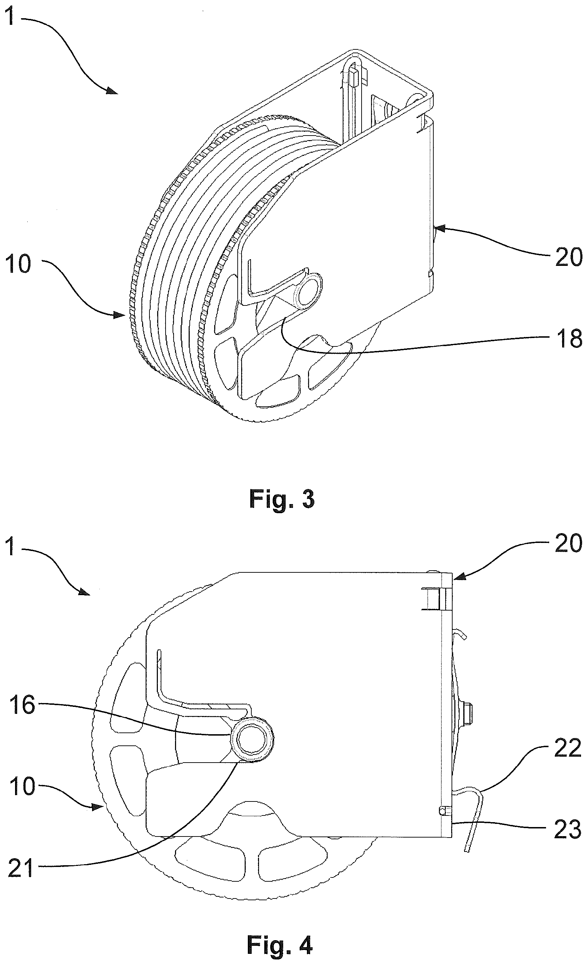

In den Figuren 3 und 4 ist eine zweite Ausführungsform einer erfindungsgemässen Vorrichtung 1 in perspektivischer Ansicht und in einer Seitenansicht dargestellt. Auch diese erfindungsgemässe Vorrichtung 1 weist einen Spulenkörper 10 mit einer U-förmig ausgestalteten Trägereinheit 20 auf. Aufgrund der grossen Ähnlichkeit mit der Vorrichtung aus Figur 1 wird lediglich auf die Unterschiede hingewiesen. Deutlich erkennbar ist, dass die Trägereinheit 20 ein klammerförmiges Befestigungsmittel 22 auf seiner Anschlagseite 23 aufweist. Dieses Befestigungsmittel 22 erlaubt ein werkzeugloses Befestigen der Vorrichtung 1 an einer Tragschiene nach DIN EU 60715:2001-09. Anstelle des hakenförmig ausgestalteten Aufnahmeelementes der Trägereinheit aus Figur 1 und 2 ist in den Figuren 3 und 4 das Aufnahmeelement 21 als Einrastprofil ausgestaltet. Der Spulenkörper 10 weist wiederum ein Befestigungselement 16 in Form einer Welle auf, welches in das Aufnahmeelement 21 der Trägereinheit 20 eingreift. Durch die Ausgestaltung des Aufnahmeelements als Einrastprofil schnappt das Befestigungselement 16 in seiner korrekten Position im Aufnahmeelement 21 ein. Entsprechend ist die Vorrichtung 1 gemäss den Figuren 3 und 4 in jeglicher Ausrichtung montierbar, ohne dass der Spulenkörper 10 aus der Trägereinheit 20 herausfällt.

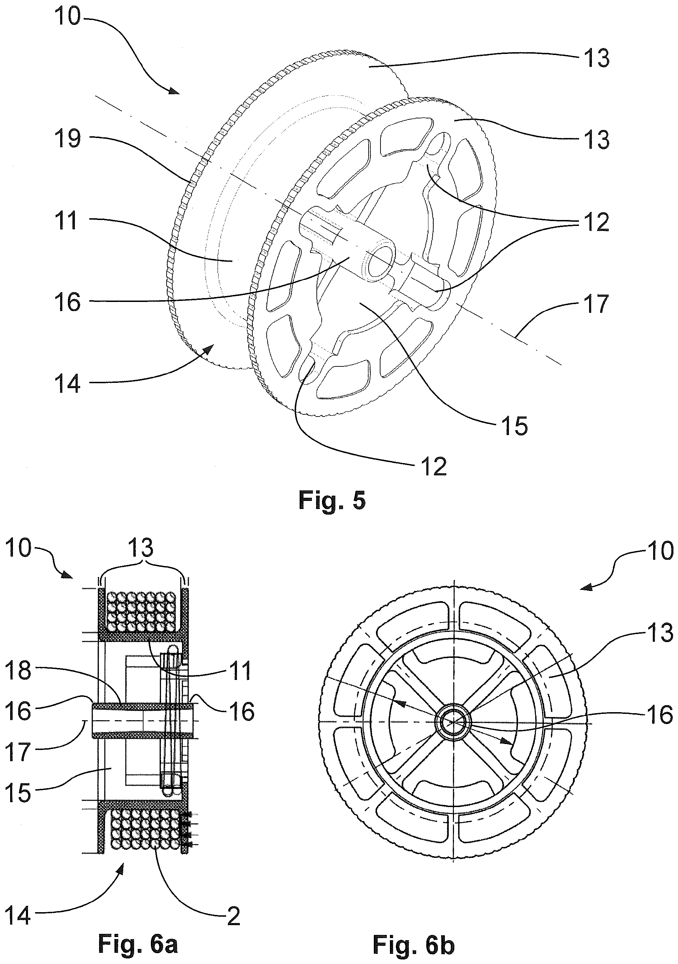

In der Figur 5 ist ein Spulenkörper 10 einer erfindungsgemässen Vorrichtung 1 (Siehe Figuren 1 bis 4) in perspektivischer Darstellung gezeigt. Der Spulenkörper 10 spannt zwischen den beiden Seitenrändern 13 und einem Wickelkern 11 einen äusserer Stauraum 14 auf, welcher für ein Glasfaserkabel 2 (siehe Figuren 1 bis 3) vorgesehen ist. Es versteht sich von selbst, dass anstelle eines Glasfaserkabels auch ein anderes, beispielsweise mit elektrischen Leitern bestücktes Kabel aufgenommen werden kann. Damit das auf dem Spulenkörper 10 aufgenommene Kabel in einen inneren Stauraum 15 innerhalb des Wickelkern 11 gelangen kann, weist der Wickelkern 11 zwischen innerem und äusserem Stauraum 14, 15 mehrere Durchgänge 12 auf. Der innere Stauraum 15 ist von aussen frei zugänglich und kann eine vorbestimmte Kabellänge mitsamt einem am Kabel montierten Verbinder aufnehmen. Zentral im Spulenkörper 10 angeordnet ist eine Welle 18, welche beidseitig das Befestigungselement 16 definiert und ein einfaches Montieren in einem korrespondierenden Aufnahmeelement 21 (siehe Figuren 2 und 4) ermöglicht. Diese Welle 18 definiert auch die zentrale Drehachse 17. Der äussere Rand der Seitenwände 16 ist umlaufend mit mehreren Rillen oder Kerben 19 versehen, welche mit dem Bremsbügel 31 der Bremsvorrichtung 30 (beides siehe Figuren 1 und 2) zusammenwirken kann. Durch die Ausgestaltung des äusseren Randes mit Kerben 19, kann die Bremswirkung der Bremsvorrichtung verbessert werden.

Die Figur 6a zeigt den Spulenkörper 10 aus Figur 5 in einer Schnittzeichnung entlang der Drehachse 17. In dieser Schnittdarstellung ist deutlich der Wickelkern 11 des Spulenkörpers 10 zu erkennen, welcher einen minimalen Durchmesser von 50 mm aufweist. Auf diesem Wickelkern 11 und zwischen den beiden Seitenrändern 13 ist das Glasfaserkabel 2 in mehreren Lagen aufgewickelt. Durch die beiden Seitenränder 13 und dem Wickelkern 12 wird ein äusserer Stauraum 14 zur Aufnahme des Glasfaserkabels 2 aufgespannt. Der Spulenkörper 10 weist weiter eine zentrale Welle 18 auf, welche beidseits ein Befestigungselement 16 bilden, um den Spulenkörper in einem korrespondierendem Aufnahmeelement einer Trägereinheit zu befestigen. Zwischen dieser Welle 18 und dem Wickelkern 11 ist ein innerer Stauraum 15 definiert, welcher einen Teil der Überlänge des Glasfaserkabels 2 aufnimmt.

Die Figur 6b zeigt den Spulenkörper 10 aus Figur 5 einer Seitenansicht. Wiederum erkennbar ist die Welle mit einem Befestigungselement 16 sowie ein Seitenrand 13, welcher umlaufend durchgehend ausgebildet ist, jedoch segmentweise ausgedünnte Wandstärken aufweist.

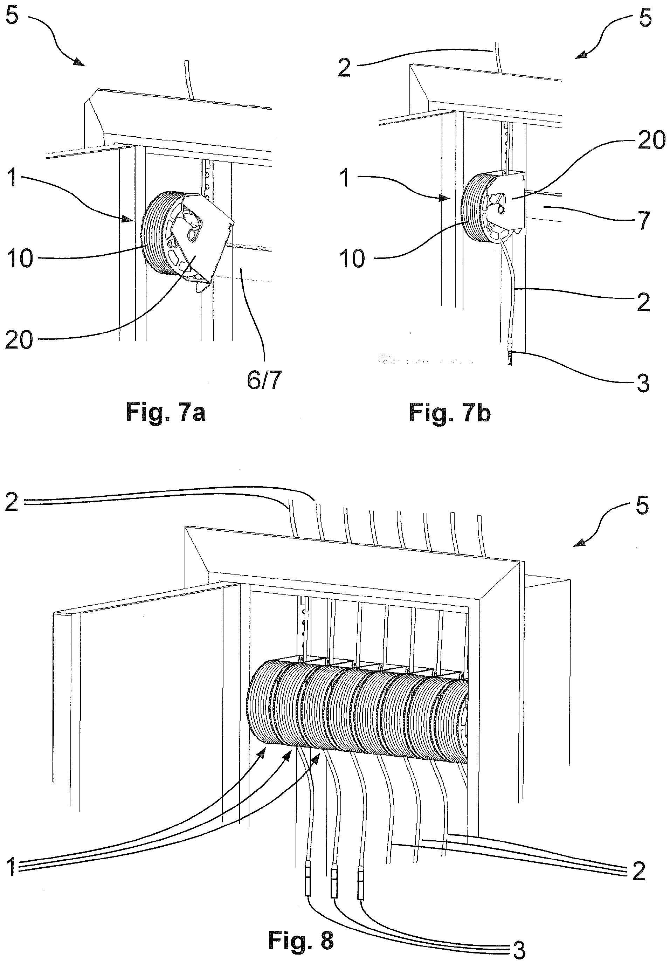

Die Figuren 7a und 7b zeigen eine ausschnittweise Ansicht eines erfindungsgemässen Installationsschrankes 5 mit je einer Vorrichtung 1 zum Zeitpunkt der Befestigung der Vorrichtung 1 (Figur 7a) bzw. mit bereits installierter Vorrichtung 1 (Figur 7b).

Der Installationsschrank 5 weist auf seiner Rückseite eine Tragschiene 7 auf, welche gleichzeitig die Anschlagfläche 6 bildet, an welcher die Trägereinheit 20 der Vorrichtung 1 befestigt wird. Die Trägereinheit 20 ist hierzu wiederum mit einer Klammer als Befestigungsmittel ausgerüstet, sodass diese einfach in die Tragschiene 7 eingehängt werden kann. In der Trägereinheit 20 ist der Spulenkörper 10 eingehängt.

In der Figur 7b ist gezeigt, dass ein Teil der Überlänge des Glasfaserkabels 2 aus dem inneren Stauraum 15 (siehe Figur 6a) herausgezogen ist und herunter hängt. Das Glasfaserkabel 2 ist bereits mit einem Verbinder 3 ausgerüstet, sodass es in eine entsprechende Komponente (nicht dargestellt) im Installationsschrank 5 eingesteckt werden kann.

Die Figur 8 zeigt einen Ausschnitt aus dem Installationsschrank 5 gemäss den Figuren 7a und 7b, wobei bereits eine Vielzahl von Vorrichtungen 1 nebeneinander installiert sind. Wiederum ist aus jeder Vorrichtung 1 ein Teil der Überlänge des Glasfaserkabels 2 aus den entsprechenden inneren Stauräumen herausgeführt, mit je einem Verbinder 3 versehen und bereit zum Anschliessen an eine korrespondierende Geräteeinheit.

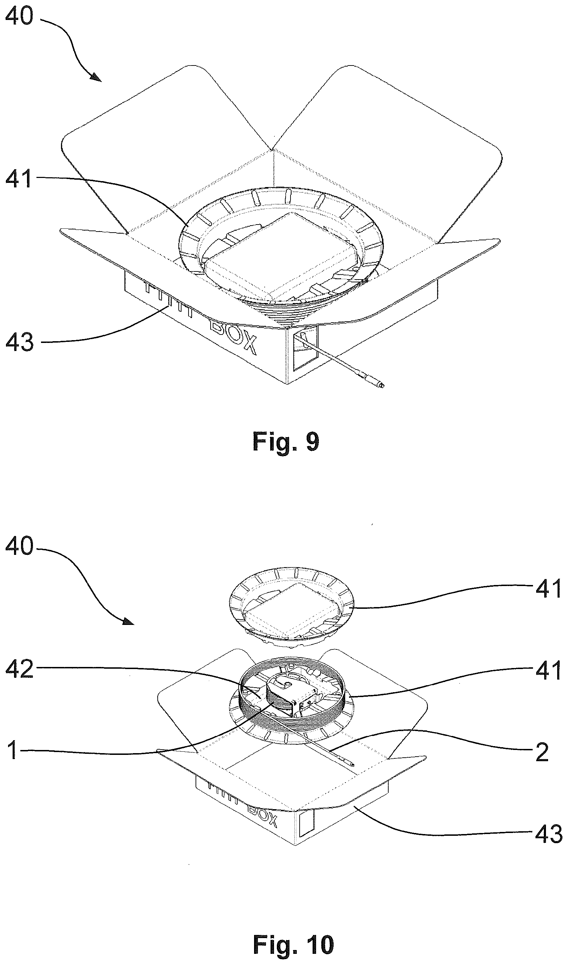

In den Figuren 9 und 10 ist eine erfindungsgemässe Installationsbox 40 abgebildet, wobei die Installationsbox im Wesentlichen aus einer Kartonschachtel 43 und einer darin verstauten Kabelspule 41 besteht. Es versteht sich von selbst, dass anstelle einer Kartonschachtel 43 auch ein Behälter aus einem anderen Material verwendet werden kann.

Figur 10 zeigt die Installationsbox 40, wobei die Kabelspule 41 zweigeteilt ist, um einen Einblick in einen Aufnahmeraum 42 im Innern der Kabelspule 41 zu erlauben. In diesem Aufnahmeraum 42 ist eine Vorrichtung 1 gemäss der Figur 1 angeordnet. Ein Glasfaserkabel 2, welches auf der Kabelspule 41 aufgewickelt ist, ist direkt verbunden mit dem Glasfaserkabel 2 der Vorrichtung 1.

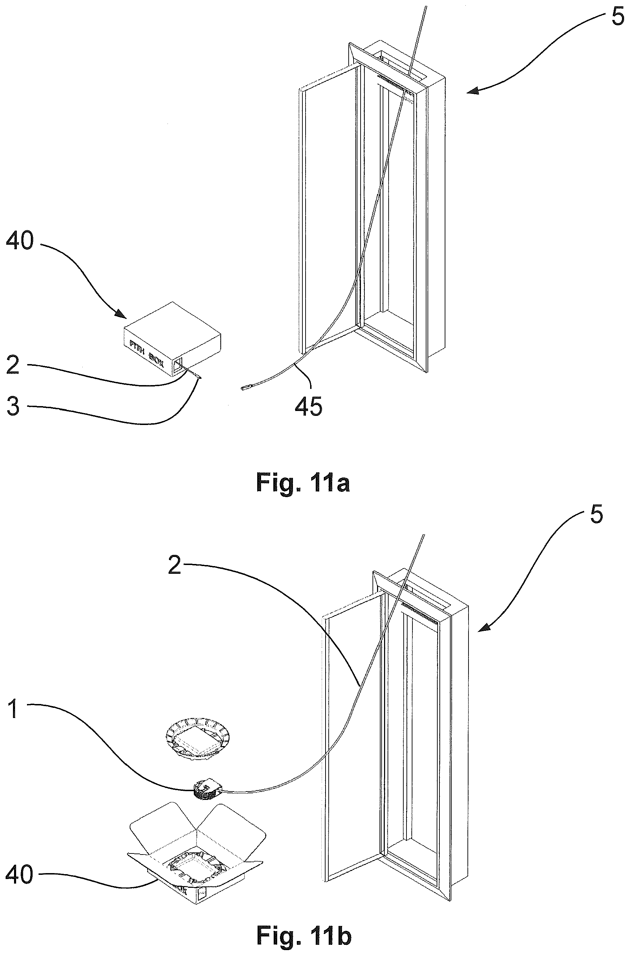

Die Figuren 11a und 11b zeigen wiederum einen Installationsschrank 5 mit einer erfindungsgemässen Installationsbox 40 gemäss den Figuren 9 und 10, welche wiederum die Vorrichtung gemäss Figur 1 enthält. Bei der Verdrahtung beispielsweise einer Wohneinheit kann der Installateur nun eine üblich gebräuchliche Einzugsseite 45 durch das entsprechende Leerrohr in den Installationsschrank 5 schieben. Diese Einzugsseite ist mit einer Haltevorrichtung ausgestaltet, welche den bereits vormontierten Verbinder 3 des Glasfaserkabels 2 der Installationsbox 40 aufnehmen kann. Sobald der Verbinder 3 mit der Einzugsseite 45 verbunden ist, kann der Installateur das Glasfaserkabel 2 mit Hilfe der Einzugsseite in das entsprechende Leerrohr einziehen. Sobald die benötigte Länge des Glasfaserkabels 2 eingezogen ist, kann die Kabelspule 41 (siehe Figuren 9 und 10) aus der Installationsbox 40 entfernt und geöffnet werden. Die überzählige Kabellänge kann auf die Vorrichtung 1 aufgespult werden und die Vorrichtung 1 im Installationsschrank 5, wie in den Figuren 7a und 7b gezeigt, befestigt werden.

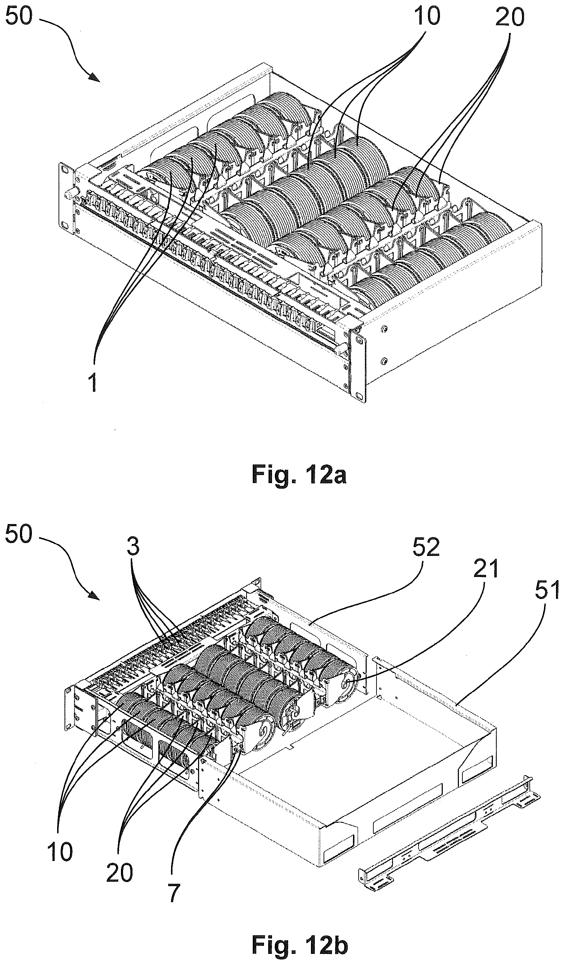

In den Figuren 12a und 12b ist ein erfindungsgemässer Rack-Einschub 50 für ein 19"-Rack abgebildet. Der Rack-Einschub 50 weist eine Bauhöhe von zwei Höheneinheiten auf und kann 24 Vorrichtungen 1 zur Aufnahme von Kabelüberlängen aufnehmen. Der Rack-Einschub 50 wird durch eine Rack-Wanne 51 und einen Einschub 52 gebildet, wobei der Einschub 52 eine Vielzahl von Vorrichtungen 1 wie vorgängig beschrieben aufnimmt. Die Vorrichtungen 1 mit Spulenkörper 10 und Trägereinheit 20 sind parallel nebeneinander in vier Reihen angeordnet. Dabei sind die Trägereinheiten 20 an Tragschienen 7 befestigt, ähnlich wie bereits zum Installationsschrank in der Figur 7a ausgeführt. die Tragschienen 7 sind jedoch nicht parallel zu einer Rückwand oder Frontplatte des Rack-Einschubs ausgebildet sondern stehen senkrecht dazu. Somit wird es möglich, dass je zwei Reihen von Vorrichtungen 1 je Rücken an Rücken an zwei aneinander montierten Tragschienen 7 im Einschub 52 befestigt sind. Um eine gute Zugänglichkeit der einzelnen Spulenkörper 10 auch bei einem komplett bestückten Einschub 52 zu gewährleisten, sind die Aufnahmeelemente 21 der Trägereinheiten 20 so modifiziert, dass der Spulenkörper 10 von schräg oben eingeführt werden kann. Auf den Spulenkörpern 10 sind bereits die entsprechenden Überlängen eines Glasfaserkabels aufgewickelt. Der entsprechende Anschlussstecker 3 ist in einem Frontpanel des Einschubs 52 eingesteckt.

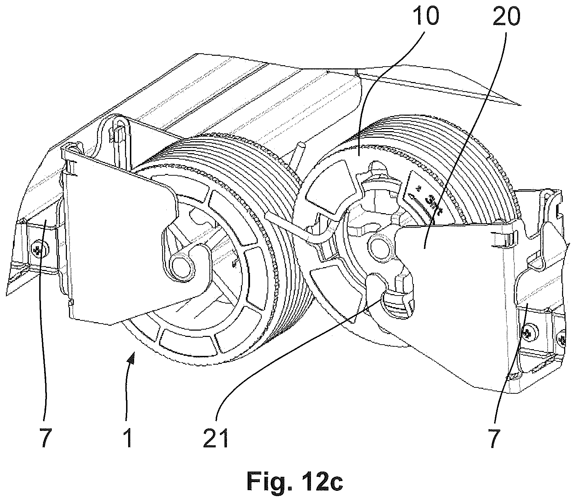

Die Figur 12c zeigt eine vergrösserte Ansicht auf zwei Vorrichtungen 1 des Rack-Einschubes nach Figur 12a. Dabei ist die eine Vorrichtung 1 an einer Tragschiene 7 darstellungsgemäss auf der linken Seite befestigt, während die zweite Vorrichtung 1 an einer Tragschiene 7 auf der rechten Seite angeordnet ist. Beide Tragschienen 7 sind jeweils Rücken an Rücken an je einer weiteren Tragschiene 7 angeordnet, wie in Figur 12b ersichtlich ist. Um die Montage des zweiten, in der Darstellung rechts, Spulenkörpers 10 in der Trägereinheit 20 zu erleichtern, ist das Aufnahmeelement 21 in einem Winkel von ca. 45° nach oben ausgerichtet und nicht wie in Figur 1 dargestellt horizontal nach vorne. Entsprechend kann beim Einführen des Spulenkörpers 10 in die Trägereinheit 20 der Spulenkörper 10 an einem bereits vorhandenen Spulenkörper vorbeigeführt werden.

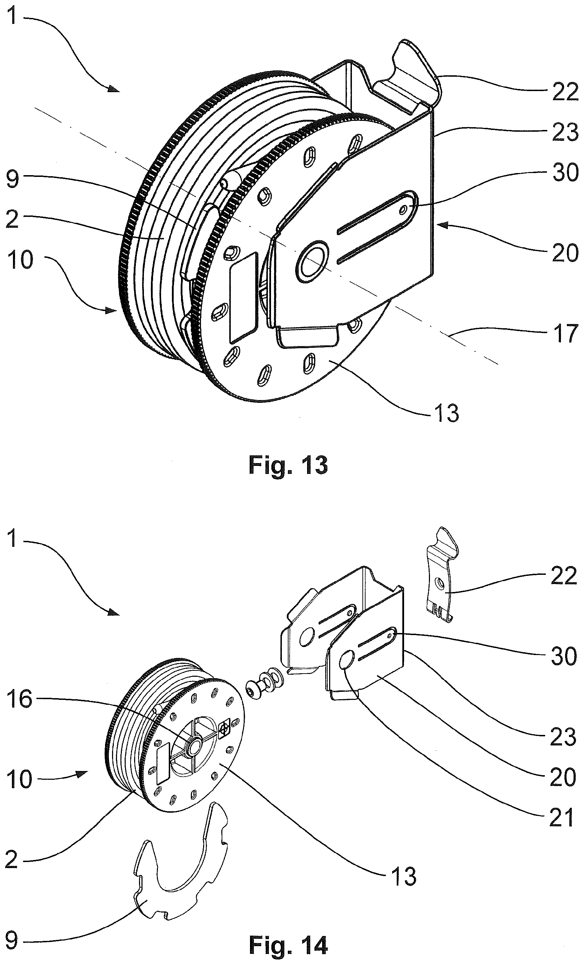

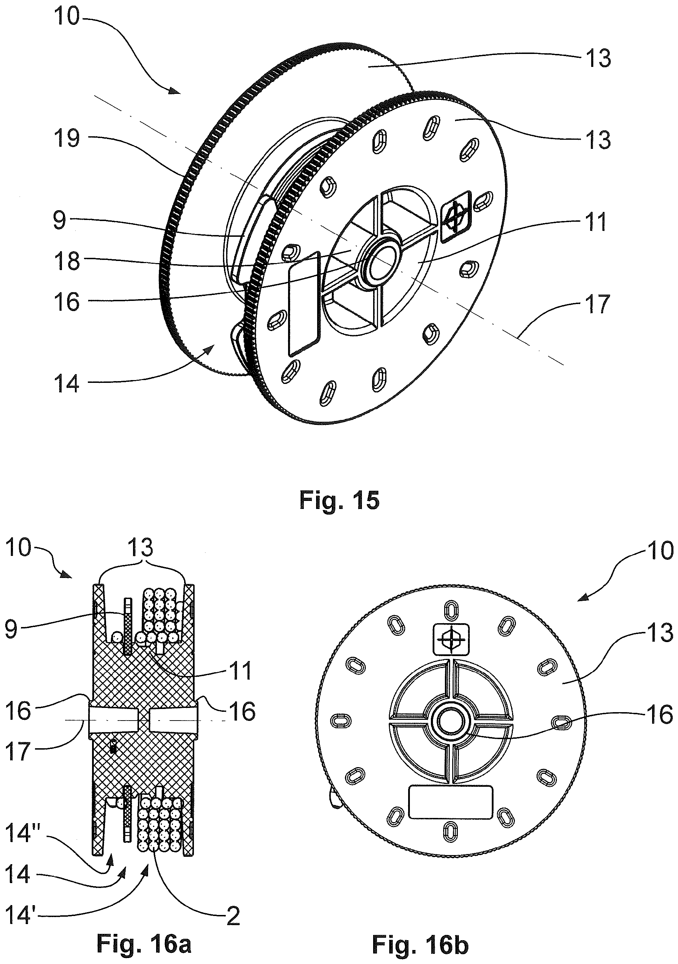

Die Figuren 13 und 14 zeigen eine weitere Ausführungsform einer erfindungsgemässen Vorrichtung 1 in perspektivischer Ansicht, wobei die Vorrichtung 1 in der Figur 14 in einer Explosionszeichnung dargestellt ist. Im Unterschied zu den vorgängig beschriebenen Ausführungsformen weist der Spulenkörper 10 keinen inneren Stauraum auf. Die gesamte Kabelüberlänge wird im Stauraum 14 (siehe Figur 15) zwischen den beiden seitlichen Begrenzungselementen 13 aufgenommen. Um die beiden Enden des aufgenommenen Glasfaserkabels 2 getrennt aufnehmen zu können, ist auf dem Wickelkern 11 (siehe Figur 16a) eine Trennwand 9 aufgesteckt, welche den Stauraum in einen ersten und einen zweiten Stauraum 14', 14" unterteilt. Das Trägerelement 20 ist wiederum als im Wesentlichen U-förmiges Blechbiegeteil ausgebildet und weist eine Anschlagseite 23 auf, welche beispielsweise in einem Installationsschrank einer Rückwand zugewandt ist. An dieser Anschlagseite 23 ist ein Befestigungsmittel 22 in Form einer Klammer angeordnet, welche ein einfaches Verbinden der Vorrichtung beispielsweise an einer Hutschiene in einem Installationsschrank erlaubt. Die Klammer 22 ist mit der Trägereinheit 20 über eine Schraubverbindung befestigt, andere Arten der Befestigung sind denkbar.

Die Trägereinheit 20 weist auf den beiden von der Anschlagseite 23 abstehenden Schenkeln je eine Bremsvorrichtung 30 auf, welche direkt aus dem Blechbiegeteil der Trägereinheit als einseitig eingespannte Blattfeder ausgestanzt wurden. Diese Blattfeder kann gegen den Spulenkörper 10 vorgespannt sein. Ebenso kann die Bremsvorrichtung 30 auch einen gegen den Spulenkörper 10 vorstehenden Bereich in Form einer Erhöhung aufweisen, welcher die Vorspannung gegen den Spulenkörper bewirkt. Am Spulenkörper 10 sind korrespondierende Vertiefungen vorgesehen, so dass bei einer Drehung des Spulenkörpers 10 in der Trägereinheit 20 jeweils eine Rastwirkung entsteht.

Die Trägereinheit 20 weist an beiden Schenkeln je eine kreisrunde Aussparung auf, welche als Aufnahmeelemente 21 für den Spulenkörper 10 dienen. An den Enden der beiden Schenkel ist die Trägereinheit 20 leicht nach aussen gebogen, um ein Einführen des Spulenkörpers 10 zu erleichtern. Zusätzlich können noch Führungshilfen vorgesehen sein, welche in Blechbiegetechnik einfach zu realisieren sind.

In den Figuren 15, 16a und 16b ist der Spulenkörper 10 der Vorrichtung aus den Figuren 13 und 14 in perspektivischer Darstellung, in einer Schnittzeichnung entlang der Drehachse 17 und in einer Seitenansicht dargestellt. Der Spulenkörper 10 weist einen Wickelkern 11 auf, auf welchem eine Kabelüberlänge beispielsweise in einem Installationsschrank aufgewickelt werden kann. Damit das Glasfaserkabel 2 nicht vom Wickelkern 11 fällt, weist der Spulenkörper 10 seitliche Begrenzungselemente 13 auf. Eine zentrale Welle 18, koaxial zur Drehachse 17 angeordnet, weist seitlich vorstehende Befestigungselemente 16 auf, welche in das Aufnahmeelement 21 der Trägereinheit 20 (siehe Figuren 13 und 14) passen. Die Begrenzungselemente 13 sind randseitig mit Kerben 19 versehen, so dass ein einfaches Drehen des Spulenkörpers 10 in der Trägereinheit von Hand ermöglicht wird. Auf ihrer Seitenfläche weisen die Begrenzungselemente 13 in regelmässigen Abständen umlaufend angeordnete Vertiefungen auf, welche mit der Bremsvorrichtung 30 der Trägereinheit 20 (siehe Figuren 13 und 14) zusammenwirken und ein Einrasten ermöglichen.

Zwischen den Begrenzungselementen 13 ist ein Stauraum 14 zur Aufnahme einer Kabelüberlänge angeordnet. Dieser Stauraum 14 kann mittels einer Trennwand 9 unterteilt werden, so dass sich ein erster und ein zweiter Stauraum 14', 14" ausbildet. Um die Trennwand 9 sicher auf dem Spulenkern 11 aufnehmen zu können, weist dieser mehrere umlaufende Kerben auf. Somit kann die Trennwand 9 an verschiedenen Positionen bedarfsgerecht eingesetzt werden, die entsprechenden Stauräume 14', 14" können grösser und kleiner gewählt werden.

## Patentansprüche

1. Vorrichtung (1) zum Aufnehmen einer Überlänge eines Kabels, insbesondere eines Glasfaserkabels (2), in einem Installationsschrank (5) umfassend einen, um eine Drehachse (17) drehbaren Spulenkörper (10) und eine Trägereinheit (20), wobei der Spulenkörper (10) einen Wickelkern (11) mit beidseitig angeordneten Begrenzungselementen (13) zur Aufnahme des aufgewickelten Kabels in einem durch den Wickelkern (11) und die Begrenzungselemente (13) gebildeten Stauraum (14) umfasst,
wobei der Spulenkörper (10) ein Befestigungselement (16) und die Trägereinheit (20) ein zum Befestigungselement (16) des Spulenkörpers (10) korrespondierendes Aufnahmeelement (21) zum lösbaren und vorzugsweise drehbaren Befestigen des Spulenkörpers (10) in oder an der Trägereinheit (20) aufweisen,
wobei die Trägereinheit (20) eine Anschlagseite (23) aufweist, welche zum Befestigen der Trägereinheit (20) an einer korrespondierenden Anschlagfläche (6) im Installationsschrank (5) dient,
wobei die Drehachse (17) des Spulenkörpers (10) parallel oder in einem maximalen Winkel von 45° zur Anschlagseite (23) der Trägereinheit (20) angeordnet ist, **dadurch gekennzeichnet, dass** die Trägereinheit (20) ein Blechbiegeteil ist und U-förmig mit der Anschlagsseite (23) als Basis und zwei parallel verlaufenden seitlichen Schenkeln ausgestaltet ist, wobei die Schenkel je ein Aufnahmeelement (21) aufweisen.

2. Vorrichtung (1) nach Anspruch 1, **dadurch gekennzeichnet, dass** die Trägereinheit (20) ein Befestigungsmittel (22) zum insbesondere werkzeuglosen lösbaren Befestigen an einer Tragschiene (7) im Installationsschrank (5) aufweist.

3. Vorrichtung (1) nach Anspruch 2, **dadurch gekennzeichnet, dass** das Befestigungsmittel (22) als Klammer ausgestaltet ist.

4. Vorrichtung (1) nach Anspruch 2 oder 3, **dadurch gekennzeichnet, dass** das Befestigungsmittel (22) lösbar an der Trägereinheit (20) befestigt ist.

5. Vorrichtung (1) nach einem der vorhergehenden Ansprüche, **dadurch gekennzeichnet, dass** der Spulenkörper (10) einen inneren Stauraum (15) aufweist, welcher im Innern des Wickelkerns (11) angeordnet ist und/oder der Stauraum (14) mittels einer Trennwand (9) in einen ersten und einen zweiten Stauraum (14', 14") unterteilt oder unterteilbar ist, wobei die Trennwand (9) vorzugsweise lösbar und in verschiedenen Positionen auf dem Wickelkern (11) fixierbar ist.

6. Vorrichtung (1) nach Anspruch 5, **dadurch gekennzeichnet, dass** zwischen dem Stauraum (14) und dem innerem Stauraum (15) und/oder dem ersten und zweiten Stauraum (14', 14") einen Durchgang (12) zum Durchführen eines Kabels angeordnet ist.

7. Vorrichtung (1) nach einem der vorhergehenden Ansprüche, **dadurch gekennzeichnet, dass** die Begrenzungselemente (13) umlaufend geschlossen sind.

8. Vorrichtung (1) nach einem der vorhergehenden Ansprüche, **dadurch gekennzeichnet, dass** die Vorrichtung (1) eine Bremsvorrichtung (30) aufweist, welche insbesondere an der Trägereinheit (20) und/oder zwischen dem Spulenkörper (10) und der Trägereinheit (20) angeordnet ist, wobei die Bremsvorrichtung (30) den Spulenkörper (10) mit einer Bremskraft beaufschlagt.

9. Vorrichtung (1) nach Anspruch 8, **dadurch gekennzeichnet, dass** die Bremsvorrichtung (30) und der Spulenkörper (10) derart korrespondierend ausgestaltet sind, dass eine Arretierung des Spulenkörpers (10) ermöglicht wird.

10. Vorrichtung nach Anspruch 8 oder 9, **dadurch gekennzeichnet dass**, die Bremsvorrichtung (30) als Bügel, insbesondere als Drahtbügel ausgebildet, und/oder insbesondere einstückig als einseitig eingespannte Blattfeder an der Trägereinheit (2) angeordnet ist, und unter Federvorspannung am Spulenkörper (10) oder am aufgewickelten Kabel anliegt.

11. Vorrichtung (1) nach einem der vorhergehenden Ansprüche, **dadurch gekennzeichnet, dass** das Aufnahmeelement (21) als insbesondere U-förmiges Einrastprofil oder Einhakprofil oder Aussparung zum Aufnehmen des Befestigungselementes (16) des Spulenkörpers (10) ausgestaltet ist.

12. Installationsbox (40) umfassend eine Kabelspule (41), **dadurch gekennzeichnet, dass** die Installationsbox (40) eine Vorrichtung (1) nach einem der Ansprüche 1 bis 11 aufweist.

13. Installationsbox (40) nach Anspruch 12, **dadurch gekennzeichnet, dass** die Vorrichtung (1) in einem Aufnahmeraum (42) in der Kabelspule (41) aufgenommen ist.

14. Installationsschrank (5) zum Installieren von elektrischen und/oder faseroptischen Komponenten, **dadurch gekennzeichnet, dass** im Installationsschrank (5) wenigstens eine Vorrichtung (1), vorzugsweise mehrere Vorrichtungen parallel nebeneinander, nach einem der Ansprüche 1 bis 11 angeordnet ist bzw. sind.

15. Rack-Einschub (50) zum Installieren von elektrischen und/oder faseroptischen Komponenten, **dadurch gekennzeichnet, dass** im Rack-Einschub (50) wenigstens eine Vorrichtung (1), vorzugsweise mehrere Vorrichtungen parallel nebeneinander, nach einem der Ansprüche 1 bis 11 angeordnet ist bzw. sind.

## Claims

1. Device (1) for holding an excess length of a cable, in particular a glass fibre cable (2), in an installation cabinet (5), comprising a coil body (10) rotatable about an axis of rotation (17) and a carrier unit (20),
wherein the coil body (10) comprises a winding core (11) with delimiting elements (13) arranged on both sides for holding the wound cable in a stowage space (14) formed by the winding core (11) and the delimiting elements (13),
wherein the coil body (10) has a fixing element (16) and the carrier unit (20) has a holding element (21) corresponding to the fixing element (16) of the coil body (10) for the detachable and preferably rotatable fixing of the coil body (10) in or on the carrier element (20),
wherein the carrier unit (20) has an abutment face (23), which is used to fix the carrier element (20) to a corresponding stop surface (6) in the installation cabinet (5),
wherein the axis of rotation (17) of the coil body (10) is arranged parallel to or at a maximum angle of 45° to the abutment face (23) of the carrier unit (20),
**characterized in that**
the carrier unit (20) is a bent sheet metal part and is configured in a U shape with the abutment face (23) as base and two lateral limbs extending in parallel, wherein the limbs each have a holding element (21).

2. Device (1) according to Claim 1, **characterized in that** the carrier unit (20) has a fixing means (22) for in particular tool-free detachable fixing to a carrier rail (7) in the installation cabinet (5).

3. Device (1) according to Claim 2, **characterized in that** the fixing means (22) is configured as a clamp.

4. Device (1) according to Claim 2 or 3, **characterized in that** the fixing means (22) is fixed detachably to the carrier unit (20).

5. Device (1) according to one of the preceding claims, **characterized in that** the coil body (10) has an inner stowage space (15), which is arranged in the interior of the winding core (11) and/or the stowage space (14) is or can be subdivided by means of a partition (9) into a first and a second stowage space (14', 14"), wherein the partition (9) is preferably detachable and fixable in different positions on the winding core (11).

6. Device (1) according to Claim 5, **characterized in that** a passage (12) for leading a cable through is arranged between the stowage space (14) and the inner stowage space (15) and/or the first and second stowage space (14', 14").

7. Device (1) according to one of the preceding claims, **characterized in that** the delimiting elements (13) are circumferentially closed.

8. Device (1) according to one of the preceding claims, **characterized in that** the device (1) has a braking device (30), which in particular is arranged on the carrier unit (20) and/or between the coil body (10) and the carrier unit (20), wherein the braking device (30) applies a braking force to the coil body (10).

9. Device (1) according to Claim 8, **characterized in that** the braking device (30) and the coil body (10) are configured to correspond to each other in such a way that locking of the coil body (10) is made possible.

10. Device according to Claim 8 or 9, **characterized in that** the braking device (30) is formed as a bow, in particular as a wire bow, and/or in particular is arranged integrally on the carrier unit (2) as a leaf spring clamped in on one side, and bears on the coil body (10) or on the wound cable under spring preload.

11. Device (1) according to one of the preceding claims, **characterized in that** the holding element (21) is configured as an in particular U-shaped latch-in profile or hook-in profile or cut-out for holding the fixing element (16) of the coil body (10) .

12. Installation box (40) comprising a cable coil (41), **characterized in that** the installation box (40) has a device (1) according to one of Claims 1 to 11.

13. Installation box (40) according to Claim 12, **characterized in that** the device (1) is held in a holding space (42) in the cable coil (41).

14. Installation cabinet (5) for the installation of electrical and/or fibre-optic components, **characterized in that** at least one device (1) according to one of Claims 1 to 11, preferably multiple devices parallel beside one another, is or are arranged in the installation cabinet (5).

15. Rack drawer (50) for the installation of electrical and/or fibre-optic components, **characterized in that** at least one device (1) according to one of Claims 1 to 11, preferably multiple devices parallel beside one another, is or are arranged in the rack drawer (50).

## Revendications

1. Dispositif (1) pour recevoir une surlongueur d'un câble, en particulier d'un câble à fibre optique (2), dans une armoire d'installation (5), comprenant un corps de bobine (10) pouvant tourner autour d'un axe de rotation (17) et une unité de support (20), le corps de bobine (10) comprenant un mandrin d'enroulement (11) avec des éléments de limitation (13) disposés des deux côtés pour recevoir le câble enroulé dans un espace de rangement (14) formé par le mandrin d'enroulement (11) et les éléments de limitation (13),
le corps de bobine (10) présentant un élément de fixation (16) et l'unité de support (20) présentant un élément de réception (21) correspondant à l'élément de fixation (16) du corps de bobine (10), pour la fixation amovible et de préférence rotative du corps de bobine (10) dans ou sur l'unité de support (20),
l'unité de support (20) présentant un côté de butée (23) qui sert à la fixation de l'unité de support (20) sur une surface de butée correspondante (6) dans l'armoire d'installation (5),
l'axe de rotation (17) du corps de bobine (10) étant disposé parallèlement ou suivant un angle maximum de 45° par rapport au côté de butée (23) de l'unité de support (20),
**caractérisé en ce que**
l'unité de support (20) est une pièce cintrée en tôle et est réalisée en forme de U avec le côté de butée (23) en tant que base et deux branches latérales s'étendant parallèlement, les branches présentant chacune un élément de réception (21).

2. Dispositif (1) selon la revendication 1, **caractérisé en ce que** l'unité de support (20) présente un moyen de fixation (22) en particulier pour la fixation amovible sans outil à un rail de support (7) dans l'armoire d'installation (5).

3. Dispositif (1) selon la revendication 2, **caractérisé en ce que** le moyen de fixation (22) est réalisé sous forme de pince.

4. Dispositif (1) selon la revendication 2 ou 3, **caractérisé en ce que** le moyen de fixation (22) est fixé de manière amovible à l'unité de support (20) .

5. Dispositif (1) selon l'une quelconque des revendications précédentes, **caractérisé en ce que** le corps de bobine (10) présente un espace de rangement intérieur (15) qui est disposé à l'intérieur du mandrin d'enroulement (11) et/ou l'espace de rangement (14) est divisé ou peut être divisé au moyen d'une paroi de séparation (9) en un premier et un deuxième espace de rangement (14', 14"), la paroi de séparation (9) pouvant être de préférence fixée de manière amovible et dans différentes positions sur le mandrin d'enroulement (11).

6. Dispositif (1) selon la revendication 5, **caractérisé en ce qu'**entre l'espace de rangement (14) et l'espace de rangement intérieur (15) et/ou le premier et le deuxième espace de rangement (14', 14") est disposé un passage (12) pour le passage d'un câble.

7. Dispositif (1) selon l'une quelconque des revendications précédentes, **caractérisé en ce que** les éléments de limitation (13) sont fermés sur la périphérie.

8. Dispositif (1) selon l'une quelconque des revendications précédentes, **caractérisé en ce que** le dispositif (1) présente un dispositif de freinage (30) qui est disposé notamment au niveau de l'unité de support (20) et/ou entre le corps de bobine (10) et l'unité de support (20), le dispositif de freinage (30) sollicitant le corps de bobine (10) avec une force de freinage.

9. Dispositif (1) selon la revendication 8, **caractérisé en ce que** le dispositif de freinage (30) et le corps de bobine (10) sont réalisés en correspondance, de telle sorte qu'un blocage du corps de bobine (10) soit possible.

10. Dispositif selon la revendication 8 ou 9, **caractérisé en ce que** le dispositif de freinage (30) est réalisé sous forme d'étrier, en particulier sous forme d'étrier en fil métallique, et/ou est disposé notamment d'une seule pièce sous forme de ressort à lame tendu d'un côté contre l'unité de support (2), et s'applique avec précontrainte de ressort contre le corps de bobine (10) ou contre le câble enroulé.

11. Dispositif (1) selon l'une quelconque des revendications précédentes, **caractérisé en ce que** l'élément de réception (21) est réalisé sous forme de profil d'encliquetage notamment en forme de U ou sous forme de profil d'accrochage ou sous forme d'évidement pour recevoir l'élément de fixation (16) du corps de bobine (10).

12. Boîte d'installation (40) comprenant une bobine de câble (41),
**caractérisée en ce que** la boîte d'installation (40) présente un dispositif (1) selon l'une quelconque des revendications 1 à 11.

13. Boîte d'installation (40) selon la revendication 12, **caractérisée en ce que** le dispositif (1) est reçu dans un espace de réception (42) dans la bobine de câble (41).

14. Armoire d'installation (5) pour l'installation de composants électriques et/ou à fibre optique, **caractérisée en ce qu'**au moins un dispositif (1), de préférence plusieurs dispositifs en parallèle les uns à côté des autres, selon l'une quelconque des revendications 1 à 11, sont disposés dans l'armoire d'installation (5).

15. Insert pour bâti (50) pour l'installation de composants électriques et/ou à fibre optique, **caractérisé en ce qu'**au moins un dispositif (1), de préférence plusieurs dispositifs en parallèle les uns à côté des autres, selon l'une quelconque des revendications 1 à 11, sont disposés dans l'insert pour bâti (50).
